# EUROPEAN PATENT APPLICATION

(11) **EP 4 231 215 A1**
(43) Date of publication of application: **23.08.2023**
(21) Application number: 22191963.2
(22) Date of filing: 24.08.2022
(51) Int. Cl.: G06Q 10/0639

(54) **OPTIMIZED CALCULATION OF MEMBER ACTIVITY METRICS**

(30) Priority: 17.02.2022 US 202263311387 P; 18.08.2022 US 202217820693
(71) Applicant: Palantir Technologies Inc., Denver, CO 80202 (US)
(72) Inventor: Bukhari, Mohammad, Denver, 80202 (US); Salem, Daniel, Denver, 80202 (US); Greene, Emily, Denver, 80202 (US); Chachkes, Julia, Denver, 80202 (US); Ginsberg, Mikenzie, Denver, 80202 (US); Pang, Tinlok, Denver, 80202 (US)
(74) Representative: Dendorfer, Claus

(57) **Abstract**

Embodiments of the present disclosure relate to an improved system for monitoring performance of members of an organization. The system allows administrators to perform complex analyses on individual team members as well as comparisons of team members within a cohort.

## Description

### TECHNICAL FIELD

The present disclosure relates to systems and techniques for data integration, analysis, and visualization. More specifically, the present disclosure relates to a member metrics system that may be configured to calculate and analyze activity metrics of a user, and generate interactive graphical user interfaces to facilitate review of, and interaction with, the metrics.

### BACKGROUND

Existing entity management tools, such as employee management tools, lack the ability to quickly and efficiently perform complex analyses on large data sets to yield useful data in a user-friendly format. For example, existing tools lack the ability to quickly traverse an organizations data of varying sources and formats (e.g., emails, voice messages) to find and analyze data associated with members (e.g., employees) that may be relevant for an administrator's needs. This problem is especially apparent for large organizations with large teams of employees. Similarly, existing tools also lack the ability to scale, for example, when growing a sales team.

### SUMMARY

Embodiments of the present disclosure relate to an improved system for monitoring performance of members of an organization. The system allows administrators to perform complex analyses on individual team members as well as comparisons of team members within a cohort.

In some embodiments, an administrator can quickly review data relating to an individual member as well as data comparing that member with other members (e.g., within a region, with similar experience, in a similar position).

The system integrates with an organization's existing data. The system can periodically access the data and perform transformations on the data to standardize the data. For example, the system may periodically access large activity data sets of the organization, including emails, phone calls, activity logs etc., extract relevant data therefrom and standardize the extracted data according to a predefined format. Updated activity metrics for each individual may then be calculated and stored in a database that is accessible to a front-end member analysis portal. When information about a member is requested, rather than accessing each of the large data sets to identify information associated with the member and then determining metrics associated with the member data, the database with pre-calculated metrics for the member may be accessed to obtain the latest member metrics. Thus, the periodic pre-calculation of member metrics may reduce computing resources, leading to improvements in efficiency and speed at which the system can provide such member performance metrics. When a member is compared to a cohort of other members the efficiency improvements are increased through use of the precalculated metrics.

The system can perform a variety of analyses on an organization's data and return the data to a user via an interactive user interface. The user interface can include a variety of visual aids, sections, and formatting to allow a user to easily review team member performance. The user can request additional analyses, via the user interface, which are performed by the system and subsequently displayed to the user in response.

In various embodiments, large amounts of data are automatically and dynamically calculated interactively in response to user inputs, and the calculated data is efficiently and compactly presented to a user by the system. Thus, in some embodiments, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, design of computer user interfaces that are useable and easily learned by humans is a non-trivial problem for software developers. The various embodiments of interactive and dynamic user interfaces of the present disclosure are the result of significant research, development, improvement, iteration, and testing. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interfaces described herein may provide an optimized display of time-varying report-related information and may enable a user to more quickly access, navigate, assess, and digest such information than previous systems.

Further, the interactive and dynamic user interfaces described herein are enabled by innovations in efficient interactions between the user interfaces and underlying systems and components. For example, disclosed herein are improved methods of receiving user inputs, translation and delivery of those inputs to various system components, automatic and dynamic execution of complex processes in response to the input delivery, automatic interaction among various components and processes of the system, and automatic and dynamic updating of the user interfaces. The interactions and presentation of data via the interactive user interfaces described herein may accordingly provide cognitive and ergonomic efficiencies and advantages over previous systems.

Various embodiments of the present disclosure provide improvements to various technologies and technological fields. For example, existing data storage and processing technology (including, e.g., in memory databases) is limited in various ways (e.g., manual data review is slow, costly, and less detailed; data is too voluminous; etc.), and various embodiments of the disclosure provide significant improvements over such technology. Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, and presentation of the updates to displayed images via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various embodiments cannot reasonably be performed by humans alone, without the computer technology upon which they are implemented. Further, the implementation of the various embodiments of the present disclosure via computer technology enables many of the advantages described herein, including more efficient interaction with, and presentation of, various types of electronic data.

The present disclosure provides a computing system for monitoring and analyzing large data sets. The computing system may comprise a computer readable storage medium having program instructions embodied therewith; and one or more processors configured to execute the program instructions to cause the computing system to: automatically and periodically: access one or more data sources comprising data associated with activities of members, the activities including at least communications with external entities; analyze the data associated with the activities of the members to identify an update to activity metrics of the members; and generate a precalculated intermediary dataset according to the update to the activity metrics of the members. The one or more processors may also be configured to execute the program instructions to cause the computing system to: in response to a user request via an interactive user interface for activity metrics of one or more members: access the precalculated intermediary dataset to identify a cumulative activity metric of the one or more members; and display, via the interactive user interface, a visual representation of the cumulative activity metric.

In some embodiments, the cumulative activity metric can be divided into rows, each row being associated with an activity performed by one of the one or more members and a date, and each row of the cumulative activity metric may show a total number of activities performed by the one of the one or more members during a selected time frame ending on the date associated with each respective row

In some embodiments, the precalculated intermediary dataset includes a cumulative activity metric for each of a plurality of activity types.

In some embodiments, the precalculated intermediary dataset includes a total activity per day metric wherein the total activity per day metric is divided into rows, each row being associated with a date and a total number of activities performed by one of the one or more members on that date.

In some embodiments, the precalculated intermediary dataset can include a total activity per day metric for each of a plurality of activity types.

In some embodiments, the one or more processors is further configured to execute the program instructions to cause the computing system to calculate an average cumulative activity metric of more than one member.

In some embodiments, the user request indicates the one or more members and a time frame for which the activity metrics are desired.

In some embodiments, the time frame includes a number of days after a start date of the one or more members or a number of days immediately preceding a present time.

In some embodiments, the user request includes a criteria by which to indicate the one or more members, wherein the criteria includes one or more of a geographic region, a start date, or a team of the one or more members.

In some embodiments, the activities comprise one or more of emails, phone calls, messages, contacts, or meetings.

In some embodiments, the one or more processors is further configured to execute the program instructions to cause the computing system to: analyze the data associated with the activities of the members to identify activities associated with a same interaction; and deduplicate the activity metrics of the members based on the identified activities associated with the same interaction.

In some embodiments, the one or more processors is further configured to execute the program instructions to cause the computing system to: generate a notification to send to a reviewer to review the activity metrics, wherein the notification is generated automatically in response to a determination that a review of a member is due within a predetermined threshold.

In some embodiments, the activities are associated with projects, and wherein the projects are associated with accounts.

In some embodiments, the one or more processors is further configured to execute the program instructions to cause the computing system to: determine whether a status of an account is active, wherein the determination is based on whether, within a predetermined time frame, a project associated with the account has changed a status or whether a member has completed an activity associated with a project associated with the account.

In some embodiments, the one or more processors is further configured to execute the program instructions to cause the computing system to: determine whether a status of a project is stale, wherein the determination is based on whether, within a predetermined time frame, an objective associated with the project has been completed, or whether a member has completed an activity associated with the project.

### BRIEF DESCRIPTION OF THE DRAWINGS

Figure 1 is a block diagram illustrating an example metrics system in communication with a user device and a storage device.
Figure 2 illustrates an example interactive user interface generated by the metrics system.
Figure 3 is a flowchart illustrating an example process for calculating the number of activities performed by a member.
Figure 4 illustrates an example interactive user interface generated by the metrics system.
Figure 5 is an example data table for optimizing data analysis and calculations of the system.
Figures 6-10 illustrate example interactive user interfaces generated by the metrics system.
Figure 11 is a flowchart illustrating an example process for generating notifications for one or more reviewers to review a member's activity.

### DETAILED DESCRIPTION

### Overview

Embodiments of the present disclosure relate to an improved system for monitoring performance of members of an organization. The system may be configured to perform complex analyses on individual team members as well as comparisons of team members within a cohort to allow administrators such as member supervisors or reviewers to review member performance.

In some embodiments, the system is configured to analyze and/or generate data relating to an individual member's performance and/or the performance of multiple members within a cohort.

In some embodiments, the system is configured to integrate with an organization's existing data. The system can periodically access the existing data, including emails, phone calls, activity logs etc., extract relevant data therefrom and calculate an intermediary dataset which can include the number of activities performed by member per day. A user may then access a front-end user interface to request analysis of a member's performance. In response to a user request, the system can access the intermediary dataset of precalculated data, rather than accessing each of the large data sets, to identify information associated with the member and then determine metrics associated with the member data. Thus, the periodic pre-calculation of an intermediary dataset may reduce computing resources, leading to improvements in efficiency and speed at which the system can provide member performance metrics.

In some embodiments, the system can generate notifications to send to an administrator such as a member's supervisor or reviewer. The notifications can indicate to an administrator that a member's review is approaching and that the administrator should access the system to review the performance of the member.

### Terms

To facilitate an understanding of the systems and methods discussed herein, several terms are described below. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

**Member Metrics System** (Also referred to as "the metrics system" or "the system"): A system to facilitate aggregating, storing, calculating, analyzing, and/or reviewing metrics of members of a team. A metrics system may be configured to calculate activity metrics of a user, analyze the metrics, and/or generate interactive graphical user interfaces to facilitate review of, and interaction with, the metrics. A metrics system may coordinate and track review of the metrics.

**Team Member** (Also referred to as "member"): An individual member of an organization, for example, an employee of an organization.

**Cohort:** A group of members defined by certain criteria. Criteria used to define a cohort can include length of tenure of members within an organization, geographic location of members, division of an organization within which members operate, responsibility roles of members, rank of members, experience level of members, tasks assigned to the members to perform, a team to which the member is assigned, and the like. In some embodiments, a cohort may be defined by more than one criteria, such as members' length of tenure and geographic region. In some embodiments, the cohorts may be predefined within the system and may match existing classifications of members within an organization. In some embodiments, a cohort may be created by a user according to criteria selected by the user.

**User:** a single person or a group of users, such as, for example, organizations, groups, and business entities. In some embodiments, user refers to a computing device of a user rather than, or in addition to, an actual human operator of the computing device. A user may interact with the system via a user interface to create, share, edit and/or review metrics of members.

**Reviewer:** A user that reviews metrics of members. In some embodiments, a reviewer may be a user and/or take some or all of the same actions as a user.

**Project:** A task that is to be completed by a team member or group of team members. In some embodiments, a project may be assigned to a team member. In some embodiments, a project can be generated by a team member. In one example implementation, a project can include selling a product to a customer or client. A project may have an associated project status, such as in progress, stale, not stale, etc. In some embodiments, a project can include various stages or objectives.

**Objective:** The various stages of a project. In some embodiments, a project is completed once all objectives have been successfully completed. In some embodiments, a project may be completed once a certain objective (e.g., a final objective) has been successfully completed even if other objectives remain incomplete. The objectives can be completed sequentially or simultaneously. An incomplete objective (e.g., the next objective to be completed) may define the stage of the project as the stage in which the project exists. In some embodiments, a project exists in only a single objective at a time. In some embodiments, a project can exist in more than one objective at a time. In one example implementation, the objectives may correspond to a project to sell a product to a customer or client and the objectives can include, for example, identifying a target customer or customers as potential buyers, qualifying a customer for the purchase, committing the customer to the purchase, and closing the deal.

**Account:** An aggregation of projects with a common characteristic, such as an association with a common entity. In one example, an account may be an aggregation of projects associated with a single customer or client, such as various products attempted to be sold (e.g., projects) to the client.

**Activities:** Various undertakings in which a member can engage to attempt to complete the objectives of a project or the project itself. Activities can include discrete activity types defined in the metrics system. Different projects can include different activity types.

**Metrics Data** (Also referred to as "Activity Data", "Activity Metrics", or "Metrics"): Data relating to the activities performed by a member. Metrics data can include the various types of activities and the number of activities performed by a member and the dates on which the activities were performed. Metrics data can include statuses of accounts and projects. Metrics data can be the result of analysis and/or computation by the system to facilitate understanding of the member's activity or performance. Example metrics data can include totals, averages, deviations, minimums, maximums, and the like. Metrics data can be calculated for any period of time. Metrics data can be calculated for individual members or for cohorts of members such as to compare members within a cohort.

**Activity Materials:** Data associated with and/or resulting from a certain activity performed by a member. Example activity materials can include emails, text messages, phone calls, receipts, meeting requests, calendar events, and the like. Activity materials can include information used to generate activity data such a date on which the activity was performed, or the type of activity that was performed.

### Example System Overview

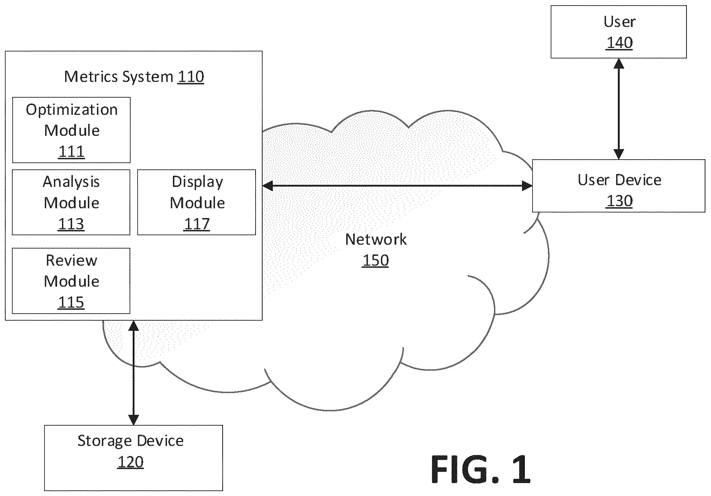

**Figure 1** is a block diagram illustrating an example metrics system 110 in communication with a user device 130 and a storage device 120. In this example, the metrics system 110 includes an optimization module 111, an analysis module 113, a review module 115, and a display module 117. In other embodiments, the metrics system 110 may include fewer or additional modules and/or functions associated with certain modules may be performed by other components. In some implementations, some or all of the modules 111, 113, 115, 117 may be located in the storage device 120, in another device in the cloud 150 and/or at the user device 130.

In some embodiments, some or all of the modules 111, 113, 115, 117 include executable software instructions configured, when executed, to perform one or more operations or functions of the modules 111, 113, 115, 117. In some embodiments, the metrics system 110 can include a processor configured to execute software instructions such as the software instructions of the modules 111, 113, 115, 117 to perform the operations of the metrics system 110, as described herein.

As shown, the user device 130 is in communication with the metrics system 110 via a network 150, which may include any combination of networks, such as a LAN, WAN, and/or the Internet. The user device 130 may interact with the metrics system 110 to execute the various modules of the metrics system 110 (e.g., the modules 111, 113, 115, 117) to perform one or more functions or operations of the metrics system 110 as described in greater detail herein. As shown, a user 140 interacts with the user device 130. The user 140 can interact with the metrics system 110 via the user device 130 such as to view one or more user interfaces generated by the metrics system 110 and/or to cause the metrics system 110 to perform one or more functions or operations. In some embodiments, the user 140 may be a reviewer.

In the example of Figure 1, the metrics system 110 is in communication with a storage device 120. In other embodiments, the storage device 120 is part of the metrics system 110. The storage device 120 can include any computer readable storage medium and/or device (or collection of data storage mediums and/or devices), including, but not limited to, one or more memory devices that store data, including without limitation, dynamic and/or static random access memory (RAM), programmable read-only memory (PROM), erasable programmable read-only memory (EPROM), electrically erasable programmable read-only memory (EEPROM), optical disks (e.g., CD-ROM, DVD-ROM, etc.), magnetic disks (e.g., hard disks, floppy disks, etc.), memory circuits (e.g., solid state drives, random-access memory (RAM), etc.), and/or the like. As another example, the storage device 120 can also include a hosted storage environment that includes a collection of physical data storage devices that may be remotely accessible and may be rapidly provisioned as needed (commonly referred to as "cloud" storage). Data stored in the storage device 120 can include, for example, activity materials, activity data, activity metrics, review notes entered by a reviewer, and the like.

In general, the optimization module 111 is configured to aggregate and organize activity data. The optimization module 111 can periodically and automatically update the activity data, which may advantageously reduce processing times and improve efficiency when retrieving and analyzing the activity data such as to generate activity metrics.

In general, the analysis module 113 is configured to analyze activity data to generate activity metrics. The analysis module 113 can generate activity metrics for an individual member or for a cohort of members such as to compare the members of the cohort. The analysis module 113 can generate activity metrics for activity data that has occurred over any length of time. The activity metrics generated by the analysis modules can include totals of activity data, averages of activities, trends of activities, deviations, predictions, and the like.

In general, the review module 115 is configured to coordinate and initiate reviews of activity data and/or activity metrics from one or more indicated reviewers. For example, the review module 115 may determine reviewers that are associated with a particular role (e.g., a supervisor level within an organization) and then provide notifications to the potential reviewers that a member's activity data and/or metrics require their review, such as prior to an annual review meeting with the member to discuss the member's performance.

In general, the display module 117 is configured to generate data for rendering interactive graphical user interfaces for display on the user device 130. As discussed further below, the user interfaces are advantageously interacted with by the user 140 to manipulate, analyze, and/or review data associated with members (e.g., activity data and/or metrics).

### Example System Implementations

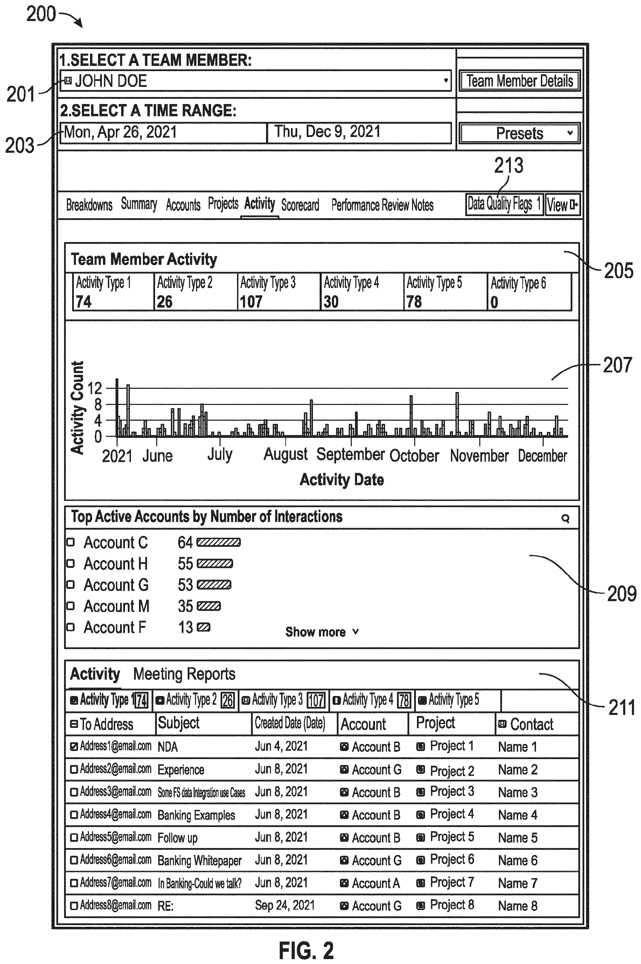

**Figure 2** illustrates an example interactive user interface 200 that may be generated by the metrics system and displayed by a user device in communication with the system. The user interface 200 can be viewed and/or interacted with by a user to facilitate an understanding of a member's performance. The user interface 200 can display an overview of activities performed by members such as within a given time frame.

The user interface 200 includes a member selector 201, a date selector 203, an activities overview banner 205, an activities chart 207, an accounts portion 209, and an activities materials portion 211.

A user may use the member selector 201 to select a member for which to view associated data. In this example, the user has selected "John Doe" and the data displayed via user interface 200 is associated with John Doe. The member selector 201 may include a drop-down list of possible members from which a user may select and/or an entry field into which a user may enter a member name or portion thereof to search for relevant members. In some embodiments, the user may select multiple members via the member selector 201 to view data associated with the multiple members simultaneously.

A user may use the date selector 203 to select a date over which to view data associated with a selected member. The date selector 203 can include a dropdown list of dates, a data entry field, or the like. In this example, a user has selected, via the date selector 203, to view data over a time period from April 26, 2021 to December 9, 2021. Any range of dates may be selected via the date selector 203.

The activities overview banner 205 includes various activity types and information associated with each. The activity types can be any type of activity that is associated with, or relevant to, a selected member and their responsibilities. As one example, a member may be a salesperson and the activity types may be activities that are related to the salesperson's responsibilities or tasks such as sending emails, making phone calls, scheduling meetings, sending messages, generating sales leads, and the like.

In this example, the overview banner 205 includes six activity types. In some embodiments, the overview banner 205 can include any number of activity types. In some embodiments, a user may be able to select, via the user interface 200, to hide some or all of the activity types shown in the overview banner 205 and/or may be able to select to add additional activity types to be displayed via the overview banner 205. In some embodiments, each activity type and associated information may be displayed in the overview banner 205 with a unique color to visualize distinguish the various activity types.

In this example, a total number of activities that were performed for each activity type during the selected time period is displayed in the overview banner 205. For example, the overview banner 205 displays "74" adjacent to "Activity Type 1" to indicate that 74 type 1 activities were performed by the selected member during the selected time period.

The activities chart 207 provides a visual indication of the various activities performed by the selected member during the selected time period. The activities chart 207 may facilitate quick review and understanding of the selected members' activities. In this example, the activities chart 207 is a bar chart. Each bar in the activities chart 207 represents the number of activities that were performed during an increment of time (e.g., a day) within the selected time frame (e.g., April 26, 2021 to Dec. 9, 2021). Each bar in the activities chart 207 is further distinguished by activity type. For example, as shown, each bar is divided by unique patterns, shading, cross-hatching, or coloring each associated with a unique activity type to represent the number of activities of that type that were performed during the increment of time (e.g., a day) represented by that individual bar. For example, the first two bars shown in the leftmost portion of the activities graph 207 show that activities of types 1 and 3, and their relative amounts, were performed during those respective increments (e.g., days).

In some embodiments, the activities chart 207 can include a line graph, pie chart, scatter plot, 3D chart, or other visual representation of the time distribution of activities of a member or members. In some embodiments, the format of the activities chart 207 may be selected by a user. In some embodiments, the activities chart 207 may additionally display a number of activities associated with each increment of time (e.g., a day) within a selected time period.

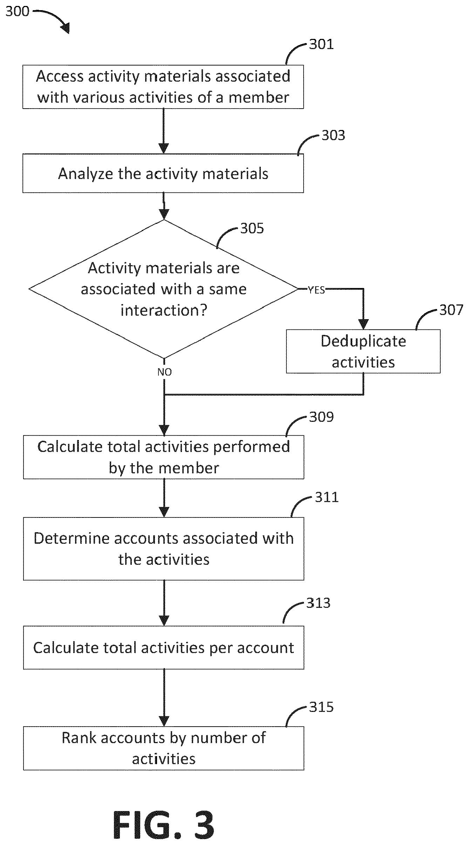

The accounts portion 209 displays a list of the most active accounts for the selected member. An account may be considered active if an activity associated with that account has recently been performed. The accounts may be characterized as more or less active relative to one another depending on the number of their associated activities that have been completed, such as within a given time frame. The system can determine the level of activity of each account, for example, as shown and discussed in greater detail with reference to Figure 3.

In this example, the accounts portion 209 displays the top five most active accounts associated with the selected member. Advantageously, a user may view the accounts portions 209 to quickly understand where the selected member has been focusing their efforts. Account C is the most account because 64 activities associated with that account have performed within the selected time frame (e.g., April 26, 2021 to Dec 9, 2021). Account F is the least active account of the five accounts shown in the accounts portion 209 because the fewest activities (e.g., 11) have been performed under account F. There may be other accounts associated with the selected member which are not shown in account portion 209. In some embodiments a user may select the number of top active accounts that are to be displayed in the accounts portion 209.

The activities materials portion 211 displays information relating to the activities performed by the selected member. A user can select the various activity types to view information associated with that type. In this example, a user has selected to view activities of type 1 that have been performed by the selected member. In this example, the type 1 activities are emails that have been sent by the selected member. The activities materials portion 211 shows information relating to the emails that were sent by the selected member during the selected time period. As shown, the activities materials portion 211 displays email accounts to whom the emails were sent, subject lines of the emails, dates the emails were sent, as well as accounts, projects, and contacts associated with each email. In some embodiments, a user may select the information displayed in activities materials portion 211 view additional details relating to the selected activity. For example, in the example embodiment shown, a user may select within the activities materials portion 211 (e.g., an email address) to cause the user interface 200 to display the email that was sent so that the user can read the email. In other examples including other types of activities, in response to a user selection within the activities materials portion 211, the user interface 200 can display other types of information such as text messages, receipts, meeting information. In some embodiments, information related to an audio message (e.g., sent to a phone voicemail box) such as message length, time the message was transmitted, message contents such as text transcription, message creator/sender, message receipient, notes associated with the message, or the like, may be displayed. In some embodiments, the user interface may be configured to activate playing of an audio message, such as a recording sent to a phone voicemail box.

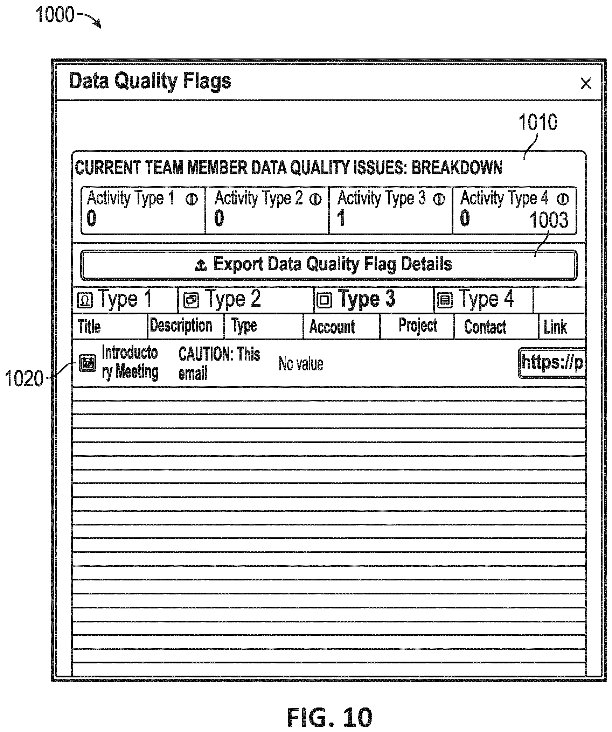

The user interface 200 includes quality indicator 213. The quality indicator can indicate problems detected with the data of a member. For example, the system may detect that certain activities of the member have not been logged or recorded in the system correctly or that activity data includes possible duplicates of an activity. For example, the activities may not have been logged or recorded as being associated with an account, project, or contact etc. Accordingly, the quality indicator 213 can indicate to a user that such a problem has been detected. In this example, the data quality indicator 213 indicates that one problem has been detected. A user can select the quality indicator 213 to further review the detected problem and/or take action associated therewith, such as is shown and described with reference to Figure 10.

**Figure 3** is a flowchart illustrating an example process 300 for calculating the number of activities performed by a member. The process 300, or portions thereof, can be performed by the system, such as by the analysis module 113 of the metrics system described with reference to Figure 1. Depending on the embodiment, the process 300 may include fewer or additional blocks and the blocks may be performed in an order that is different than illustrated.

At block 301, the system accesses activity materials that are associated with activities that have been performed by a member for whom activities analysis is desired. The activity materials may be associated with activities of various activity types. The activity materials data can be accessed and retrieved from a data storage of the system such as the storage device described with reference to Figure 1. Activity materials can include emails, messages, receipts, meeting invites, etc., as discussed herein.

At block 303, the system analyzes the activity materials. The analysis can include identifying information contained within the activity materials associated with the activity. For example, the system can parse the activity materials to extract information relating to the activity. As one example, in embodiments where the activity material is an email, the system can analyze the email to determine a time the email was sent, a subject of the email, the sender, the receiver, and the like. As another example, in embodiments where the activity material is a meeting request, the system can analyze the meeting request to identify a time of the meeting, a location of the meeting, invitees of the meeting, a topic of the meeting, and the like.

Block 303 may be performed by modules specifically designed for the type or source of activity material accessed at block 301. For example, meeting requests or invites may be processed with a routine specifically designed to parse out information from the particular sender. In some embodiments, block 303 may be performed using data mining techniques such as regular expression (regex) matching or similarity matching to extract relevant pieces of information, such as dates, times, locations, names, etc., from unstructured text. In some embodiments, block 303 may utilize a natural language processing system to analyze the activity materials.

At block 305, the system compares activities materials to determine whether various activity materials are associated with the same interaction. In some embodiments, the system may determine whether activities of different activity types are associated with a same interaction. For example, the system may determine that a meeting request has a meeting time and location that is the same as a meeting time and location identified in an email, and thus that the email and meeting request are associated with the same interaction (e.g., the same meeting). As another example, the system may determine that an email and phone call are associated with the same interaction if the email was sent at a same or similar time as when the phone call was made and if the email sender and receiver are the same individuals as the parties to the phone call.

In some embodiments, at block 305, the system may utilize a similarity matching algorithm, such as Levenshtein distance, to compare pieces of information extracted from the activity materials, such as meeting times or message subject lines, that may be textually represented in different variations. A maximum threshold or distance may be used to determine whether two textual representations should be treated as identical. For example, if an activity material includes the phrase "Meeting Location A", literal string matching would determine another activity material including the phrase "Meeting Loc. A" to be distinct. Applying Levenshtein distance matching on these phrases however, the algorithm would determine that the distance between the two phrases is 5, determine that this value is less than a threshold (e.g., 6) and may thus determine that the activity materials are associated with a same interaction. In some embodiments, the system may implement a natural language processing system to perform the functions of block 305.

At block 307, the system deduplicates redundant activities (e.g., multiple activities that have activity materials determined to be associated with a same interaction). Advantageously, deduplication reduces or eliminates the possibility of counting a single interaction as multiple different activities (e.g., under multiple various activity types). As an example, in embodiments, where a member is a salesperson, the member may be incentivized to perform a certain number of activities. The salesperson may send an email and make a phone call to schedule the same meeting. The system may deduplicate the email and the phone (e.g., discard one or the other) such that the member will only get credit for having performed a single activity because the email and the phone call were both related to the same interaction (e.g., scheduling the same meeting).

At block 309, the system calculates the total number of activities performed by the member. In some embodiments, the system can calculate the total number of activities performed within each activity type.

At block 311, the system determines the accounts that are associated with each of the activities performed by the member. In some embodiments, the system at block 311 can use any of the functions, operations, or algorithms described with reference to blocks 303 and/or 305, such as data mining techniques, regular expression (regex), natural language processing, similarity matching algorithms, Levenshtein distance, etc. For example, the system may parse an email (e.g., subject line, body of the email, sender, recipient, etc.) to determine the account with which that email is associated.

At block 313, the system calculates the total number of activities performed by the member per account associated with the member. At block 315, the system ranks the accounts associated with the member by the number of activities performed under each account.

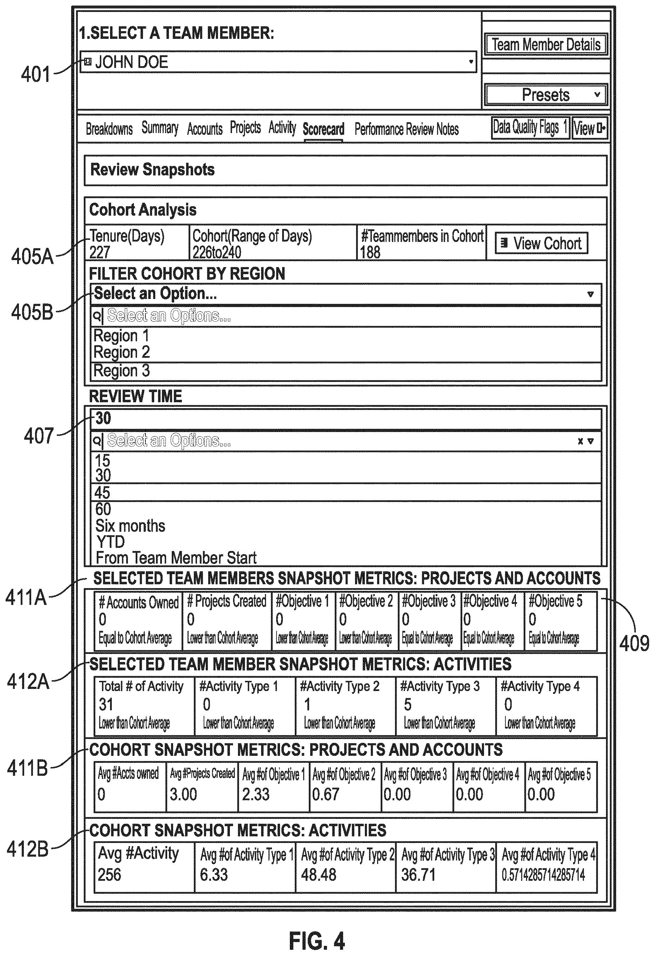

**Figure 4** illustrates an example interactive user interface 400 that may be generated by the metrics system and displayed by a user device in communication with the system. The user interface 400 can be viewed and/or interacted with by a user to facilitate an understanding of a member's performance. The user interface 400 can display an overview of an analysis of a member's activities such as within a given time frame and/or compared with a cohort.

The user interface 400 includes a member selector 401, cohort selector 405 (e.g., 405A, 405B), review time selector 407, and a metrics portion 409.

A user may select a member, using member selector 401, for which the user desires to view an analysis. The member selector 401 can operate as described with reference to Figure 2.

A user may use the cohort selector 405 to select a cohort against which they desire to analyze the selected member. The cohort selector 405 includes a dropdown list of various cohorts. In some embodiments, the cohort selector 405 can include a search bar in which a user may enter a desired cohort. In some embodiments, a user may enter characteristics or criteria to define a cohort to create a cohort against which to analyze the selected member.

The cohort can be defined by any characteristic or criteria as discussed herein. In this example, a user has selected, via cohort selector 405A, to define the cohort by members' length of tenure within the organization. The user has also selected the length of that tenure (e.g., 226 to 240 days) to define the cohort. The cohort selector 405A displays that the selected member's length of tenure is 227 days, and that there are 188 members within the cohort (e.g., 188 members with lengths of tenure between 226 to 240 days).

In this example, the user can also select further criteria by which to define the cohort. For example, the user can use cohort selector 405B to select a region (e.g., region 1, 2, and/or 3) in which members operate or reside to further define the cohort against which the user desires to analyze the selected member. In response to a user selection of one of the regions by which to further define the cohort, the cohort selector 405A may update the number (e.g., 188) of members displayed as being in the cohort. In some embodiments, a user may select other criteria by which to define or further define the cohort, such as the other criteria discussed elsewhere herein.

A user can select, using review time selector 407, a time frame for which to analyze the selected member and cohort. The review time selector 407 includes a dropdown list of various time frames. In some embodiments, the review time selector 407 can include a search bar in which a user may enter a desired time frame. In some embodiments, the selected time frame can be the time frame occurring immediately prior to the current time (e.g., past 15 days). In some embodiments, the selected time frame can be the time frame occurring immediately after a selected previous date such as a start date (e.g., 15 days after start date). In embodiments, where the selected time frame occurs after a previous date (e.g., after start date), the time frame may span different dates for different members within a cohort. For example, members within a cohort may have started on different dates and thus the 15-days-after-start-date selected time frame may span a different set of days for different members depending on their respective start dates. Advantageously, analyzing member activity based on start date (although start dates may differ depending on member) can provide useful insight into member performance during a time of interest such as when the member is receiving training shortly after starting as a member.

The system analyzes the activities of the selected member and cohort during the selected time frame to generate metrics data. The metrics portion 409 displays the various calculated metrics based on the analysis of the member and cohort activities during the selected time frame.

The metrics portion 409 includes projects and accounts sections 411A, 411B for the selected member and the cohort, respectively. The metrics portion 409 includes activities sections 412A, 412B for the selected member and the cohort, respectively. Advantageously, a user can view metrics data for the selected member (e.g., in sections 411A and 412A) and simultaneously view metrics data for the cohort (e.g., in sections 411B and 412B) to understand how the selected member is performing relative to the cohort (e.g., other members of the cohort).

The projects and accounts section 411A includes metrics data on the number of accounts owned, managed, or associated with the selected member. The projects and accounts section 411A also includes metrics data on the number of projects created by the member as well as the number of objectives achieved by the selected member. The projects and accounts section 411B includes data corresponding to the metrics in 411A but calculated as averages for all the members of the cohort.

The activities section 412A includes metrics relating to the number of activities performed by the selected member such as the total activities and total activities for each activity type. In this example, the selected member has performed a total of 31 activities during the selected time frame and has performed 1 activity of type 2 and 5 activities of type 3. The activities section 412B includes data corresponding to the metrics in 412A but calculated as averages for all the members of the cohort.

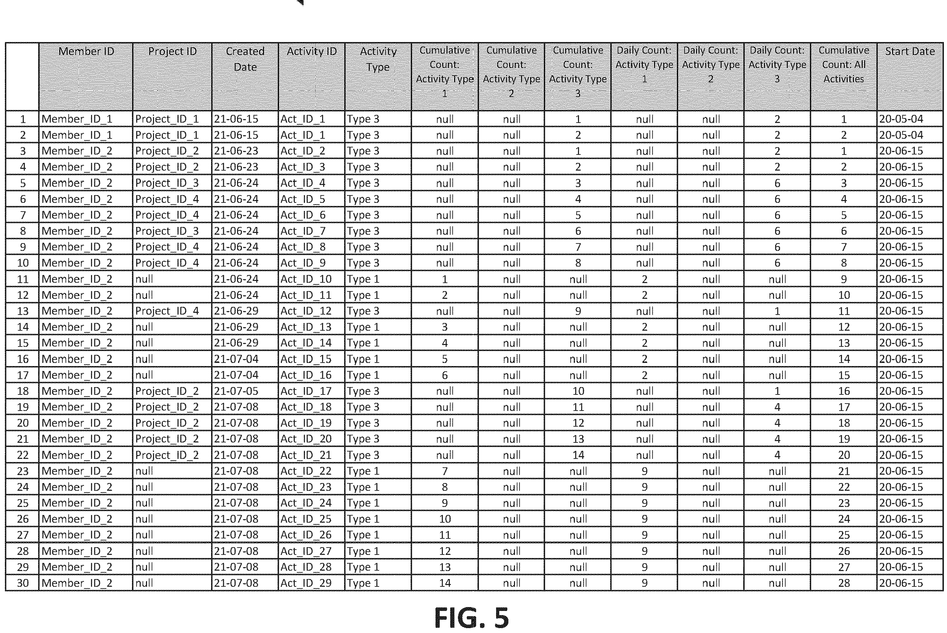

The system may be capable of quickly and efficiently calculating the metrics data displayed in the metrics portion 409. Advantageously, a user may not experience delays when updating the user interface 400 such as by selecting a different member a different cohort, and/or a different review time frame. Advantageously, a user may be able to review large amounts of data quickly and efficiently. Example implementations of efficient data calculation are described in greater detail herein, for example, as shown and discussed with reference to Figures 5-7.

**Figure 5** is an example data table 500 storing activity data (e.g., cumulative, daily totals) for members, which is usable to optimize data analysis and calculations (e.g., metrics calculations). The data table 500 may be stored in a storage medium of the system such as the storage device 120. The system can access the data table 500 to perform one or more calculations (e.g., metrics calculations) to display via an interactive user interface such as any of the user interfaces discussed herein. As one example, the system may access the data table 500 to quickly calculate the metrics for display in user interface 400 as shown as discussed with reference to Figure 4. Advantageously, the system may use the data table to improve efficiency and performance of the system (e.g., reduce the amount of time required to perform calculations) such as by reducing processing times and/or number of processing steps.

The data table 500 includes data organized by columns and rows. The "Member ID" column includes information to identify members associated with performed activities. The "Project ID" column includes information to identify projects associated with performed activities. The "Created Date" includes information to identify a date on which an activity was performed and/or recorded. In some embodiments, the "Created Date" includes information to identify a time at which an activity was performed and/or recorded. The "Activity ID" column includes information identifying an activity. The "Activity Type" column includes information that identifies to which type the performed activities are associated. The "Cumulative Count" columns include a cumulative count of the number of activities performed within each activity type. The "Daily Count" columns include a total number of activities that were performed, of any activity type, during a given day. In some embodiments, the data table 500 may include columns in addition to, or in place of, the "Daily Count" columns, that include a total number of activities that were performed, of any activity type, during some other time period, such as during a week, a month, or a year. The "Cumulative Count: All Activities" column includes a cumulative count of the total performances of activities, for all activity types, that has been performed by the indicated member. The "Start Date" column indicates a date on which the associated member began their tenure at the organization. The data table 500 is provided as an example and is not meant to be limiting. In some embodiments, the data table 500 may include less data than what is shown in this example or more data than what is shown in this example, such as more or less rows or columns. For example, the data table 500 can include more rows relating to all members within a selected cohort.

In this example, the first two rows of data table 500 include data associated with a first member (e.g., having member ID "Member_ID_1"). Rows 3-30 include data associated with a second member (e.g., having member ID "Member_ID_2"). The first two rows show that the first member performed two activities of Type 3 on 2021-06-15.

The system can update the data table 500. The system may update the data table 500 by accessing data stored in the system or accessible by the system such as data in the storage device 120. For example, the system may update the data table 500 by adding new rows, which may correspond to new activities performed, and by updating existing rows, such as to update a total daily count of activities performed in a given day. In some embodiments, the system may update the data table 500 automatically. For example, the system may update the data table 500 according to set time intervals, such as every hour, every 24 hours, every week, and the like. As another example, the system may update the data table 500 upon detection of a recently performed activity. In some embodiments, the system may update the data table 500 in response to a user request.

Advantageously, by periodically updating the data table 500, the system has access to optimized and pre-calculated data to allow the system to more quickly calculate metrics such as for displaying in one or more of the user interfaces discussed herein. Thus, the data table 500 may reduce processing times and improve computing efficiency by reducing the processing that is required in response to a user request to render a user interface or to perform calculations (e.g., metrics calculations). For example, a user may select (e.g., via one of the user interfaces discussed herein), to view performance of a selected member and a selected cohort over a certain time frame. In response to the user request, the system can access the data table 500 to calculate metrics of the selected user and the selected cohort. Three example implementations are provided below in which the system can access the data table 500 when calculating metrics.

Example 1: The system may access the "Cumulative Count: All Activities" column to quickly retrieve the total number of all activities performed within the selected time frame for a selected member or members within a selected cohort. In the example shown, row 30 indicates that the member having member ID "Member_ID_2" has performed 28 activities (of activity types 1, 2, and 3) from 2021-06-23 to 2021-07-08. The system can use the retrieved total number of activities performed to calculate and display metrics to the user via a user interface, without needing to access or analyze activity material or individual activity data to identify and count the cumulative activities of the member or members.

Example 2: The system may access the "Cumulative Count: Activity Type X" columns to quickly retrieve the total number of activities performed by activity type within the selected time frame for a selected member or members within a selected cohort. In the example shown, the data table 500 shows that from 2021-06-23 to 2021-07-08, the member having member ID "Member_ID_2" has performed fourteen type 1 activities, zero type 2 activities, and fourteen type 3 activities. The system can use the retrieved total number of activities performed by activity type to calculate and display metrics to the user via a user interface, without needing to access or analyze activity material or individual activity data to identify and count the cumulative activities of the member or members. For example, the system can retrieve a total number of activities performed within each activity type during the selected time frame for the selected member(s) by retrieving data from a single cell within each of the "Cumulative Count: Activity Type X" columns, rather than from multiple cells and/or multiple data sources. In the example shown, for each of the "Cumulative Count: Activity Type X" columns, the system can retrieve the data from the cell corresponding to the most recent date while ignoring cells without data (e.g., cells that are "null"). As shown, the system can retrieve data from cells within row 30, row 3, and row 22, for each of columns "Cumulative Activity Count: Activity Type" 1, 2, and 3, respectively. Thus, by accessing only three cells in a single data table, the system can determine the total number of activities performed (e.g., 14, 0, 14) for each of activity types 1, 2, and 3 by the selected member within the selected time frame.

In the example shown, the data table 500 displays "null" within the "Cumulative Count: Activity Type X" columns on rows where no activity of a certain type was performed. In some embodiments, rather than display "null", the data table 500 may instead display the most recent cumulative count of each respective activity type. For example, within rows 23-30 under "Cumulative Count: Activity Type 3", the data table 500 may display "14" instead of "null" because, although no activities of type 3 were performed on those dates, the most recent cumulative count for type 3 activities is 14. In this embodiment, to determine a cumulative count of activities of certain types, the system may access all of the cumulative and daily counts for a member in a single row (or record) of data. For example, the system may retrieve data from cells within only row 30 for each of columns "Cumulative Activity Count: Activity Type" 1, 2, and 3, respectively, without the need for aggregating activities of each of those types from multiple data sources. Thus, by accessing only three cells within a single row, the system can determine the total number of activities performed (e.g., 14, 0, 14) for each of activity types 1, 2, and 3 by the selected member within the selected time frame.

Example 3: The system may access the "Daily Count: Activity Type X" columns to quickly retrieve, by activity type, the total number of activities performed on a certain day by a selected member or members within a selected cohort. In the example shown, rows 13-15 indicate that the member having member ID "Member_ID_2" has performed, on 2021-06-29, one type 3 activity and two type 1 activities. Rows 16-17 indicate that the same member has performed, on 2021-07-04, two type 1 activities. The system can use the retrieved total daily number of activities performed by activity type to calculate and display metrics to the user via a user interface, without needing to access or analyze activity material or individual activity data to identify and count the cumulative activities of the member or members. For example, the system can retrieve a total number of activities performed during a given day for each activity type during the selected time frame for the selected member(s) by retrieving data from a single cell within each of the "Daily Count: Activity Type X" columns, rather than from multiple cells and/or multiple data sources. In the example shown, for each of the "Daily Count: Activity Type X" columns, the system can retrieve the data from any of the cells corresponding to a given day while ignoring cells without data (e.g., cells that are "null"). As shown, the system can retrieve data from cells within rows 14 or 15 to determine the number of type 1 activities (e.g., 2) performed on 2021-06-29 and row 13 to determine the number of type 3 activities (e.g., 1) performed on 2021-06-29. Thus, by retrieving data from only three cells in a single data table, the system can determine the total number of activities performed (e.g., 2, 0, 1) for each of activity types 1, 2, and 3 by the selected member on.

In the example shown, the data table 500 displays "null" within the "Daily Count: Activity Type X" columns on rows where no activity of a certain type was performed. In some embodiments, rather than display "null", the data table 500 may instead display the total daily count of each respective activity type. For example, within rows 14-15 under "Daily Count: Activity Type 3", the data table 500 may display "1" instead of "null" because the most total daily count for type 3 activities on 2021-06-29 is 1. In this embodiment, to determine a total daily count of activities of certain types, the system may access only three cells all from a single row. For example, the system may retrieve data from cells within only row 15 for each of columns "Daily Activity Count: Activity Type" 1, 2, and 3, respectively. Thus, by accessing only three cells within a single row, the system can determine the total number of activities performed (e.g., 2, 0, 1) for each of activity types 1, 2, and 3 by the selected member on 2021-06-29.

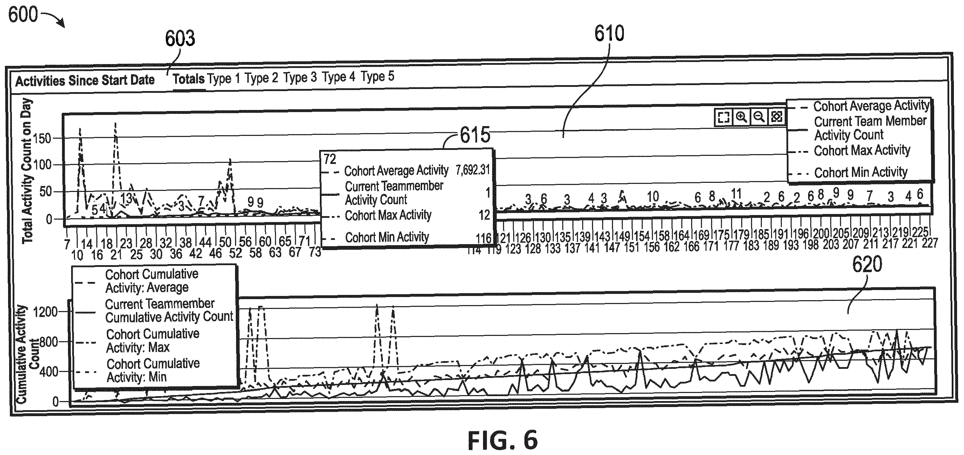

**Figure 6** illustrates an example interactive user interface 600 that may be generated by the metrics system and displayed by a user device in communication with the system. The user interface 600 includes a selection bar 603, a total activities graph 610, and a cumulative activities graph 620. The system may generate data to render the graphs 610 and 620 based on accessing a precalculated intermediary data set, such as the data table 500 described herein. Advantageously, accessing a precalculated intermediary dataset to generate the data to render the graphs 610 and 620 may reduce processing times, and improve speed and efficiency of the computing system (e.g., increase the speed at which the graphs 610 and 620 are rendered).

The total activities graph 610 is a line graph that shows a total number of activities that were performed on any given day during a time frame. The time frame may be selected by the user via the user interface 600. In this example, the time frame is 227 days after the start date of a selected member. In some embodiments, the time frame spans the same days for the selected member as for each of the other members in the cohort. In some embodiments, the time frame spans different days for at least some of the members of the cohort and/or the selected member. For example, the selected time frame of 227 days after start date may be the same 227 days (e.g., the same 227 days after the single start date of the selected member), or may be a different set of 227 days (e.g., 227 days after the respective start dates of each member of the cohort).

The total activities graph 610 shows the total activities performed per day by the selected member as well as information relating to the total number of activities performed by day by the cohort and/or members of the cohort. In this example, the total activities graph 610 shows an average total number of activities performed by day by the members of the cohort, a maximum number of activities performed by day by any given individual within the cohort, and a minimum number of activities performed by day by any given individual within the cohort. Advantageously, the total activities graph 610 provides a visual indication of the selected member's activity during the time frame compared to the cohort's activity during the time frame. A user may view the total activities graph 610 to quickly review and understand a selected member's performance as compared with other members of the cohort.

The user may be able to select (e.g., click on and/or hover over) portions of the graph to view additional information 615. The additional information 615 includes daily information for the cohort maximum activity, the cohort minimum activity, the cohort average activity, and the selected member's activity.

The cumulative activities graph 620 is a line graph that shows a cumulative number of activities that were performed by any given day during a time frame. The time frame may be selected by the user via the user interface 600 and may include the various time frames discussed above with reference to graph 610. The cumulative activities graph 620 includes information relating to a selected member's cumulative activities as well as information relating to the cohort's cumulative activities (e.g., cohort average, minimum, and maximum as discussed above with reference to graph 610).

In this example, a user has selected, via the selection bar 603, to view graphs of information (e.g., graphs 610 and 620) for total activities performed (e.g., all activity types). A user may select, via the selection bar 603, to view information relating to specific types of activities. For example, in response to a user selection via the selection bar 603, the user interface 600 may display similar graphs as shown in Figure 6 but for a specific activity type (e.g., total type 1 activity count on day and cumulative type 1 activity count).

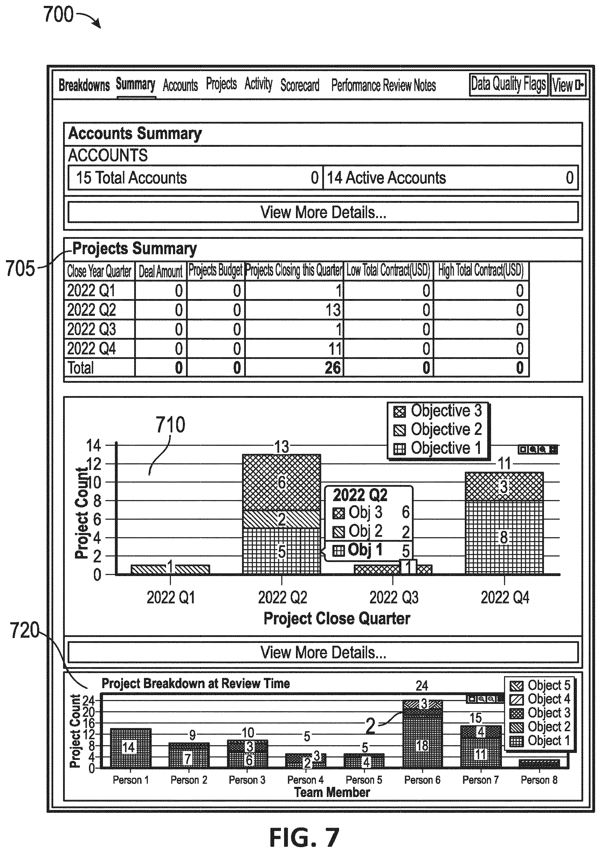

**Figure 7** illustrates an example interactive user interface 700 that may be generated by the metrics system and displayed by a user device in communication with the system. The user interface 700 includes a projects summary 705, a member projects graph 710, and a cohort projects graph 720.

The projects summary 705 includes information relating to various projects assigned to a selected member. The information is divided by quarters per year. As an example, the projects summary 705 shows that a selected member has 13 projects that are expected to close in the second quarter of 2022 as well as 26 total projects that are expected to close for the entire year 2022.

The member projects graph 710 is a bar graph showing information relating to a selected member's projects for the year and the various stages that the projects are in (e.g., which objectives have been completed). For example, the selected member has 13 projects that are expected to close (e.g., capable of being closed) in the second quarter of 2022. Of those 13 projects, five are currently in the objective 1 stage, two are currently in the objective 2 stage, and six are currently in the objective 3 stage. A user reviewing the member projects graph 710 may determine that the member should focus on the five projects at objective 1 stage so that they can be closed by the second quarter.

The cohort projects graph 720 is a bar graph showing information relating to the projects of various members of a cohort. The cohort projects graph 720 shows the number of projects owned, assigned to, or otherwise associated with the various member. For example, member 3 has 10 projects and member 6 has 24 projects. The cohort projects graph 720 also shows the various stages (e.g., objectives) of each of the projects. For example, of the 10 projects of member 3, one project is at objective 5 stage, three projects are at objective 3 stage, and six projects are at objective 1 stage. A user may view the cohort projects graph 720 understand how various members of a cohort are performing relative to one another (e.g., are the members working on many or few projects, are the members advancing their projects through the objective stages). In some embodiments, the cohort projects graph 720 displays the projects data for the members over a period of time such as a time frame selected by the user (e.g., 30 days since start date, last 6 months, etc.). In some embodiments, the cohort projects graph 720 displays the projects data for the members at a single point in time such as a current time.

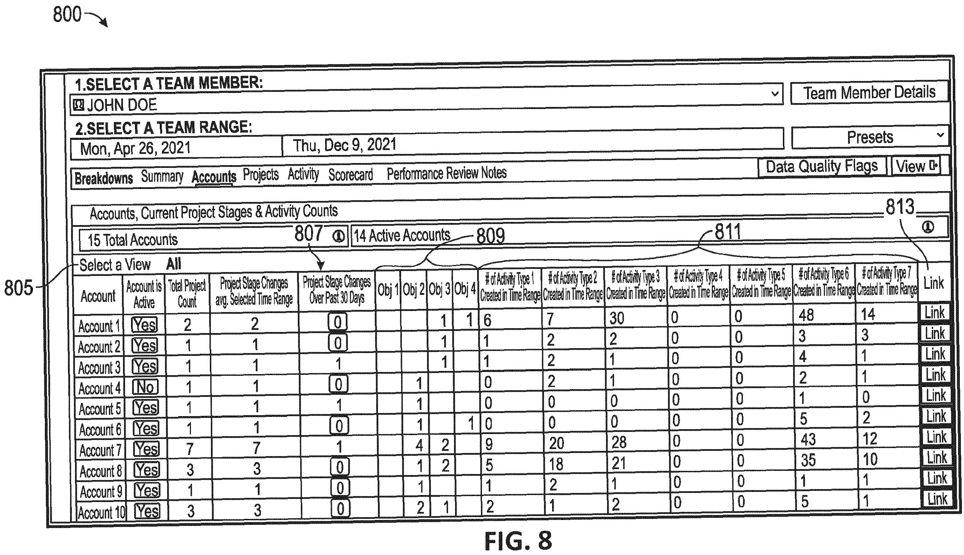

**Figure 8** illustrates an example interactive user interface 800 that may be generated by the metrics system and displayed by a user device in communication with the system. The user interface 800 includes an accounts overview 805. The accounts overview 805 includes information about the accounts that are associated with the selected member. A user may view the user interface 800 including the accounts overview 805 to understand a members performance relating to individual accounts.

The accounts overview 805 includes a list of accounts associated with the selected member (or cohort). Each account is shown as active or not active. For example, "Account 4" is not active, whereas the other accounts shown are active. An active may be considered active if, within a certain time frame (e.g., last 30 days), the member has performed a threshold number of activities for the account and/or if the account includes a threshold number of projects that have changed state (e.g., project has progressed from objective 1 to objective 2). In some embodiments, a user may select the time frame for which the account active status is determined.

The accounts overview 805 includes column 807 showing the number of project objective status changes within a given time frame (e.g., last 30 days). For example, none of the projects of "Account 1" have changed status (e.g., progressed to a subsequent objective) within the last 30 days and "Account 3" has had one project status change in the last 30 days. A user may view the accounts overview 805 including column 807 to quickly visualize the accounts of the member that do not have projects that are progressing through the objectives (e.g., the accounts that are at risk of becoming inactive for lack of progressing projects). The user can then take appropriate action such as reassigning certain accounts to other members or encouraging the member to engage more frequently with a certain account.

The accounts overview 805 includes columns 809. The columns 809 show project stage data for each account. For example, "Account 1" has one project that is in the "Objective 3" stage and one project that is in the "Objective 4" stage. A user may view the columns 809 to quickly visualize the stages in which the projects of each of the accounts are.

The accounts overview 805 includes columns 811. The columns 811 show activity data for each account. The activity data of columns 811 may correspond to a time frame selected by the user. The system may access a precalculated data set, such as the data table 500 discussed herein, to gather data for displaying in columns 811. In this example, for "Account 2", the member has performed one type 1 activity, two type 2 activities, two type 3 activities, zero type 4 or type 5 activities, three type 6 activities, and three type 7 activities,

The accounts overview 805 includes columns 813. The column 813 includes links associated with each account. A user may select the links to navigate to additional data regarding each account to perform further investigation and analysis of the account and member performance relating thereto.

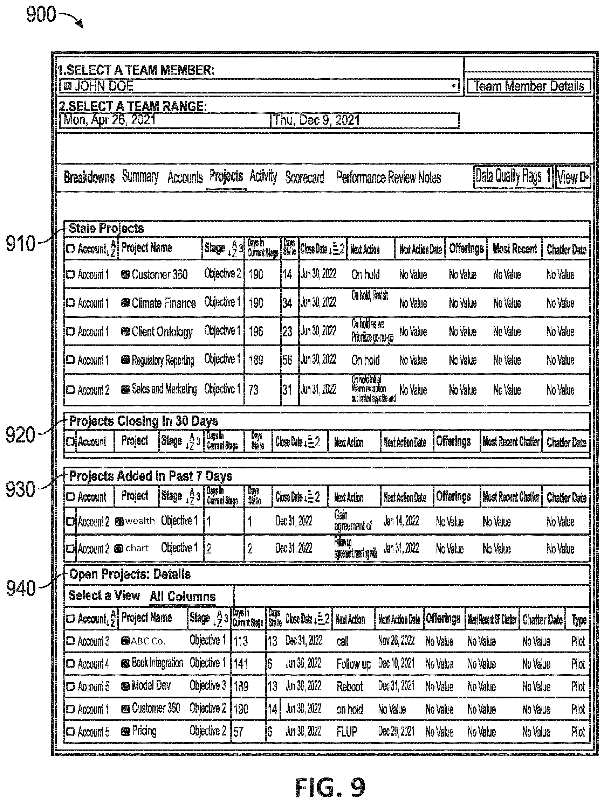

**Figure 9** illustrates an example interactive user interface 900 that may be generated by the metrics system and displayed by a user device in communication with the system. The user interface 900 includes a stale projects portion 910, a closing projects portion 920, an added projects portion 930, and an open projects portion 940. A user may view the user interface 900 to review and analyze information relating to the projects of a selected member, such as over a selected time frame.

The stale projects portion 910 displays information relating to stale projects of respective accounts assigned the selected member. For example, "Account 1" has four projects that are stale, one of which is in the objective 2 stage and three of which are in the objective 1 stage. The system may determine that a project is stale if, within a certain threshold time frame, such as 30 days, the project has not changed objective stages and/or the member has not performed any activity related to the project. The stale projects portion 910 displays the number of days during which each stale project has been in the current objective stage and the number of days during which the project has been stale. For example, the "Customer 360" project under the "Account 1" has been in the objective 2 stage for 190 days and has been stale for 14 days. In some embodiments, the stale projects portion 910 may not include a project unless the project has been stale for longer than a threshold time period such as 10 days. A user may view the stale projects portion 910 to review which accounts and which projects of the accounts need attention from the member.

The closing projects portion 920 shows projects of respective accounts assigned the selected member that are closing within a certain time frame such as the next 30 days. In this example, the selected member does not have any projects that are closing in the next 30 days. In embodiments, where the selected member does have projects closing, the closing projects portion 920 may display information similar to the other portions 910, 930, and/or 940.

The added projects portion 930 shows projects that have been added to respective accounts assigned to the selected member within a certain time frame, such as the past 7 days. Opportunities may be added for example, if they are assigned to the selected member and/or if they are generated or created by the selected member. Similar to the stale projects portion 910, the added projects portion 930 shows the number of days during which each project has been in the current objective stage and the number of days during which the project has been stale. For example, the "wealth" project under the "Account 2" has been in the objective 1 stage for 1 day and has been stale for 1 day.

The open projects portion 940 shows projects that of respective accounts assigned to the selected member that are open. A project may be displayed in one or more of portions 910-940 depending on the various categorizations of the project. For example, a project may be categorized as open and stale.

**Figure 10** illustrates an example interactive user interface 1000 that may be generated by the metrics system and displayed by a user device in communication with the system. The user interface 1000 includes an overview portion 1001, a details portion 1020, and an export selector 1003.

The user interface 1000 may be displayed in response to a user selection via an interface, such as one of the other interfaces shown and discussed herein. For example, the user interface 1000 may be displayed in response to a user selection of quality indicator 213 shown and discussed with reference to Figure 2.

The overview portion 1010 displays the types of activities that include activities that have been recorded or logged in the system with potential problems. In this example, an activity of type 3 has been recorded in the system with a potential problem.

The details portion 1020 displays details relating to the activities that were logged or recorded in the system with potential problems. In this example, the activity with a potential problem (e.g., "introductory meeting") is shown. In this example, this activity has been recorded in the system without being associated with an account, a project, or a contact, as shown in the details portion 1020.

The export selector 1003 can be selected by a user to export a list of the activities with potential problems (e.g., to a .csv file). Selecting the export selector 1003 may cause the list of problematic activities to be downloaded and/or sent to one or more persons. For example, the list may be sent to the member associated with the problematic activities so that the user can correct the problem associated with the activities (e.g., link the activities with an account, project, or contact).

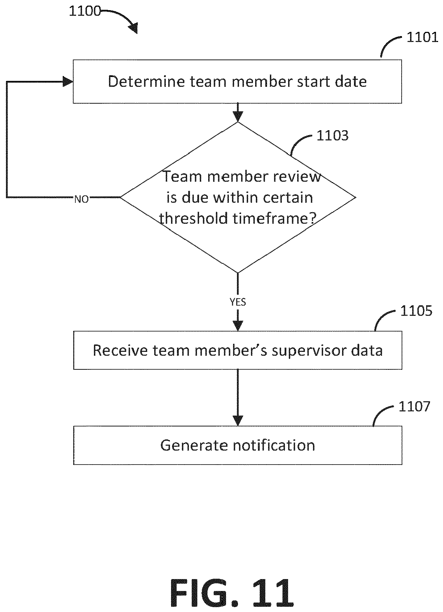

**Figure 11** is a flowchart illustrating an example process 1100 for generating notifications for one or more reviewers to review a member's activity. The process 1100, or portions thereof, can be performed by the system, such as by the analysis module 113 of the metrics system described with reference to Figure 1. Depending on the embodiment, the process 1100 may include fewer or additional blocks and the blocks may be performed in an order that is different than illustrated. The system may execute the process 1100 automatically, such as at a set frequency, and/or in response to a user request. The system may execute the process 1100 at any desired frequency, such as may be set by a user, such as once per hour, once per day, once per week, and the like.

At block 1101, the system may determine the date on which a certain team member began at the organization. The start date may be stored in the system such as in a storage device and may be accessible and/or retrievable by the system.

At block 1103, the system may determine whether a review of the member is due within a certain threshold time frame. The threshold time frame could be 1 day, or 3 days, or 5 days, or a week, as examples. The review may be due 30, 60, or 90 days after the start date of the member, as examples. The review may be conducted by a supervisor or reviewer of the member.

At block 1105, if the review is due within the threshold time frame, the system, the system may determine the member's supervisor data, such as the names of the member's supervisor(s), and the contact information of the member's supervisor(s).

At block 1107, the system can generate one or more notifications to be sent to the member's supervisor(s). The notification(s) can be an email, text message, or the like. The notification(s) may indicate to the supervisor(s) that the review is due soon and that the supervisor(s) should prepare for the review by reviewing the activity of the member. In some embodiments, a reviewer may be able to enter notes, via a user interface, when reviewing a member's performance. The notification(s) may include a link to the activity data and/or metrics of the member such as a link to one or more of the user interfaces discussed herein. The notification(s) may include data relating to the activity and/or metrics of the member directly in the notification(s).

### Additional Implementation Details and Embodiments

Various embodiments of the present disclosure may be a system, a method, and/or a computer program product at any possible technical detail level of integration. The computer program product may include a computer readable storage medium (or mediums) having computer readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer readable storage medium (or mediums).

The computer readable storage medium can be a tangible device that can retain and store data and/or instructions for use by an instruction execution device. The computer readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A nonexhaustive list of more specific examples of the computer readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions (as also referred to herein as, for example, "code," "instructions," "module," "application," "software application," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, declarative programming languages, such as SQL, and procedural programming languages, such as the "C" programming language or similar programming languages. Computer readable program instructions may be callable from other instructions or from itself, and/or may be invoked in response to detected events or interrupts. Computer readable program instructions configured for execution on computing devices may be provided on a computer readable storage medium, and/or as a digital download (and may be originally stored in a compressed or installable format that requires installation, decompression or decryption prior to execution) that may then be stored on a computer readable storage medium. Such computer readable program instructions may be stored, partially or fully, on a memory device (e.g., a computer readable storage medium) of the executing computing device, for execution by the computing device. The computer readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. Each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart(s) and/or block diagram(s) block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid state drive) either before or after execution by the computer processor.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted in some implementations. The methods and processes described herein are also not limited to any particular sequence, and the blocks or states relating thereto can be performed in other sequences that are appropriate.

Each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, etc. with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the aboveembodiments may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows Server, etc.), Windows CE, Unix, Linux, SunOS, Solaris, Blackberry OS, VxWorks, or other suitable operating systems. In other embodiments, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

As described above, in various embodiments certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain embodiments, one or more of the computing devices and/or systems of the disclosure may include mobile computing devices, and user interfaces may be accessible through such mobile computing devices (for example, smartphones and/or tablets).

Many variations and modifications may be made to the above-described embodiments, the elements of which are to be understood as being among other acceptable examples. All such modifications and variations are intended to be included herein within the scope of this disclosure. The foregoing description details certain embodiments. However, no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

The term "substantially" when used in conjunction with the term "realtime" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, etc. may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain embodiments require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general purpose computer comprising one or more processors should not be interpreted as excluding other computer components, and may possibly include such components as memory, input/output devices, and/or network interfaces, among others.

Certain exemplary and non-limiting embodiments according to the present disclosure are defined by the following Enumerated Example Emboidments (EEEs):
EEE 1: A computing system for monitoring and analyzing large data sets, the computing system comprising: a computer readable storage medium having program instructions embodied therewith; and one or more processors configured to execute the program instructions to cause the computing system to: automatically and periodically: access one or more data sources comprising data associated with activities of members, the activities including at least communications with external entities; analyze the data associated with the activities of the members to identify an update to activity metrics of the members; and generate a precalculated intermediary dataset according to the update to the activity metrics of the members; in response to a user request via an interactive user interface for activity metrics of one or more members: access the precalculated intermediary dataset to identify a cumulative activity metric of the one or more members; and display, via the interactive user interface, a visual representation of the cumulative activity metric.
EEE 2: The computing system of EEE 1, wherein the cumulative activity metric is divided into rows, each row being associated with an activity performed by one of the one or more members and a date, and wherein each row of the cumulative activity metric shows a total number of activities performed by the one of the one or more members during a selected time frame ending on the date associated with each respective row.
EEE 3: The computing system of EEE 1 or EEE 2, wherein the precalculated intermediary dataset includes a cumulative activity metric for each of a plurality of activity types.
EEE 4: The computing system of any of EEEs 1-3, wherein the precalculated intermediary dataset includes a total activity per day metric wherein the total activity per day metric is divided into rows, each row being associated with a date and a total number of activities performed by one of the one or more members on that date.
EEE 5: The computing system of any of EEEs 1-3, wherein the precalculated intermediary dataset includes a total activity per day metric for each of a plurality of activity types.
EEE 6: The computing system of any of EEEs 1-5, wherein the one or more processors is further configured to execute the program instructions to cause the computing system to calculate an average cumulative activity metric of more than one member.
EEE 7: The computing system of any of EEEs 1-6, wherein the user request indicates the one or more members and a time frame for which the activity metrics are desired.
EEE 8: The computing system of EEE 7, wherein the time frame includes a number of days after a start date of the one or more members or a number of days immediately preceding a present time.
EEE 9: The computing system of EEE 7 or EEE 8, wherein the user request includes a criteria by which to indicate the one or more members, wherein the criteria includes one or more of a geographic region, a start date, or a team of the one or more members.
EEE 10: The computing system of any of EEEs 1-9, wherein the activities comprise one or more of emails, phone calls, messages, contacts, or meetings.
EEE 11: The computing system of any of EEEs 1-10, wherein the one or more processors is further configured to execute the program instructions to cause the computing system to: analyze the data associated with the activities of the members to identify activities associated with a same interaction; and deduplicate the activity metrics of the members based on the identified activities associated with the same interaction.
EEE 12: The computing system of any of EEEs 1-11, wherein the one or more processors is further configured to execute the program instructions to cause the computing system to: generate a notification to send to a reviewer to review the activity metrics, wherein the notification is generated automatically in response to a determination that a review of a member is due within a predetermined threshold.
EEE 13: The computing system of any of EEEs 1-12, wherein the activities are associated with projects, and wherein the projects are associated with accounts.
EEE 14: The computing system of EEE 13, wherein the one or more processors is further configured to execute the program instructions to cause the computing system to: determine whether a status of an account is active, wherein the determination is based on whether, within a predetermined time frame, a project associated with the account has changed a status or whether a member has completed an activity associated with a project associated with the account.
EEE 15: The computing system of EEE 13 or EEE 14, wherein the one or more processors is further configured to execute the program instructions to cause the computing system to: determine whether a status of a project is stale, wherein the determination is based on whether, within a predetermined time frame, an objective associated with the project has been completed, or whether a member has completed an activity associated with the project.

While the above detailed description has shown, described, and pointed out novel features as applied to various embodiments, it may be understood that various omissions, substitutions, and changes in the form and details of the devices or processes illustrated may be made without departing from the spirit of the disclosure. As may be recognized, certain embodiments of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

## Claims

1. A computer-implemented method for monitoring and analyzing large data sets, the method comprising:
automatically and periodically:
accessing one or more data sources comprising data associated with activities of members, the activities including at least communications with external entities;
analyzing the data associated with the activities of the members to identify an update to activity metrics of the members; and
generating a precalculated intermediary dataset according to the update to the activity metrics of the members;
in response to a user request via an interactive user interface for activity metrics of one or more members:
accessing the precalculated intermediary dataset to identify a cumulative activity metric of the one or more members; and
displaying, via the interactive user interface, a visual representation of the cumulative activity metric.

2. The method of claim 1, wherein the cumulative activity metric is divided into rows, each row being associated with an activity performed by one of the one or more members and a date, and wherein each row of the cumulative activity metric shows a total number of activities performed by the one of the one or more members during a selected time frame ending on the date associated with each respective row.

3. The method of claim 1 or claim 2, wherein the precalculated intermediary dataset includes a cumulative activity metric for each of a plurality of activity types.

4. The method of any of claims 1-3, wherein the precalculated intermediary dataset includes a total activity per day metric wherein the total activity per day metric is divided into rows, each row being associated with a date and a total number of activities performed by one of the one or more members on that date.

5. The method of any of claims 1-3, wherein the precalculated intermediary dataset includes a total activity per day metric for each of a plurality of activity types.

6. The method of any of claims 1-5, further comprising:
calculating an average cumulative activity metric of more than one member.

7. The method of any of claims 1-6, wherein the user request indicates the one or more members and a time frame for which the activity metrics are desired.

8. The method of claim 7,
wherein the time frame includes a number of days after a start date of the one or more members or a number of days immediately preceding a present time; and/or
wherein the user request includes a criteria by which to indicate the one or more members, wherein the criteria includes one or more of a geographic region, a start date, or a team of the one or more members.

9. The method of any of claims 1-8, wherein the activities comprise one or more of emails, phone calls, messages, contacts, or meetings.

10. The method of any of claims 1-9, further comprising:
analyzing the data associated with the activities of the members to identify activities associated with a same interaction; and
deduplicating the activity metrics of the members based on the identified activities associated with the same interaction.

11. The method of any of claims 1-10, further comprising:
generating a notification to send to a reviewer to review the activity metrics, wherein the notification is generated automatically in response to a determination that a review of a member is due within a predetermined threshold.

12. The method of any of claims 1-11, wherein the activities are associated with projects, and wherein the projects are associated with accounts.

13. The method of claim 12, further comprising:
determining whether a status of an account is active, wherein the determination is based on whether, within a predetermined time frame, a project associated with the account has changed a status or whether a member has completed an activity associated with a project associated with the account; and/or
determining whether a status of a project is stale, wherein the determination is based on whether, within a predetermined time frame, an objective associated with the project has been completed, or whether a member has completed an activity associated with the project.

14. A computer readable storage medium having program instructions embodied therewith, wherein the program instructions, when executed by one or more processors of a computing system, cause performance of operations which comprise the operations recited in any of claims 1-13.

15. A computing system for monitoring and analyzing large data sets, the computing system comprising:
a computer readable storage medium having program instructions embodied therewith; and
one or more processors configured to execute the program instructions to cause the computing system to perform operations which comprise the operations recited in any of claims 1-13.
